# EUROPEAN PATENT SPECIFICATION

(11) **EP 0 386 591 B1**
(45) Date of publication and mention of the grant of the patent: **22.09.1993**
(21) Application number: 90103800.0
(22) Date of filing: 27.02.1990
(51) Int. Cl.: A01B 63/10, B66F 7/00, F15B 15/00

(54) **Hydraulic circuit for use in lifting mechanism of work vehicle**
Hydraulischer Kreis zum Gebrauch in Hebemechanismen bei Arbeitsfahrzeugen
Circuit hydraulique destiné au mécanisme de levage d'un véhicule de travail

(30) Priority: 08.03.1989 JP 57603/89
(43) Date of publication of application: 12.09.1990
(73) Proprietor: Kubota Corporation, Naniwa-ku, Osaka (JP)
(72) Inventor: Iritani, Hirofumi, c/o Kubota Ltd., Sakai Seizosho, Sakai-shi, Osaka (JP)
(74) Representative: Säger, Manfred, Dipl.-Ing.

(56) References cited:
- DE-A- 3 035 760
- FR-A- 2 280 815

## Description

### BACKGROUND OF THE INVENTION

### 1 FIELD OF THE INVENTION

The present invention relates to a hydraulic circuit for use in a lifting mechanism of a work vehicle, according to the preamble of the main claim. Such a circuit is known from FR^{.}A^{.}2 280 815.

### 2 DESCRIPTION OF THE RELATED ART

If in a hydraulic circuit of the above-described type the hydraulic device is a hydrostatic transmission device, and the hydrostatic transmission device (commonly referred to as an HST) employs a closed circuit construction, the charge oil to be fed to this device may be small in amount just enough to compensate leakage amount. For this reason, it is a common practice to utilize the hydraulic power source for the work vehicle actuator also as a charge oil power source for the hydrostatic transmission device thus minimizing the number of power source and consequently simplifying the entire circuit construction.

Also, in such hydraulic circuit for a lifting mechanism of a work vehicle, it is known to connect a return oil passage from the work implement actuator to an input terminal of the charge oil passage (Japanese utility model No. 1706048).

Further, it is also conceivable to connect a return oil passage from a relief valve for the feed oil passage for the work implement actuator with the input terminal of the charge oil passage (US-A-4 631 980).

With the first-mentioned construction, the pressure of the charge oil passage for the change-speed device inevitably acts as a back pressure to the work implement actuator. This is particularly disadvantageous in the case of a single acting cylinder type actuator. That is, with this type of actuator, a lowering action of the implement relies solely on the weight of the implement per se, and therefore, the lowering action of the implement tends to be slow and insufficient in stroke if the implement is light in weight.

With the second-mentioned construction, the relief valve pressure is set at a few tens of bar whereas the pressure of the charge oil passage is set at five bar. Accordingly, like the first-mentioned construction, the charge oil passage pressure which is relatively large in magnitude with respect to the relief oil pressure often acts as a back pressure large enough to disturb the proper function of the relief valve, whereby the relief valve may act in an unexpectable manner.

Therefore, the primary object of the present invention is to provide an improved hydraulic circuit for use in a lifting mechanism of a work vehicle which circuit permits smooth and reliable lowering motion of the work implement even if the implement is light in weight and which permits also proper function of a feed oil passage for the work implement actuator and of the relief valve for the charge oil passage.

### SUMMARY OF THE INVENTION

For accomplishing the above-noted object, according to the invention, a hydraulic circuit for use in a lifting mechanism of a work vehicle comprises: a hydraulic power source; an oil tank; a feed oil passage for feeding oil from the hydraulic power source to a single acting hydraulic cylinder for lifting up and down a work implement; a charge oil passage for feeding oil from the hydraulic power source to a hydraulic device; and relief valves for the feed oil passage and the charge oil passage; the feed oil passage and the charge oil passage being connected in parallel relative to each other with hydraulic power source; a first return oil passage from the cylinder and a second return oil passage from the relief valve being directly connected with the oil tank so that with lowering of the work implement return oil from the cylinder is directly returned to the oil tank, return oil from the relief valve being directly returned to the oil tank, wherein the hydraulic device is a hydrostatic transmission device, and said feed oil passage includes a main valve for switching over pressure to said hydraulic cylinder among a lift-up position, a neutral position and a lift-down position, said first return oil passage includes a poppet valve for opening and closing said first return oil passage with respect to said oil tank in correspondence with said lift-down position and with said lift-up and said neutral position of said main valve, respectively, an unloader valve being provided at an inlet portion to said charge oil passage for preventing oil from said hydraulic power source from entering said charge oil passage in correspondence with said lift-up position of said main valve and for allowing the oil to enter said charge oil passage in correspondence with said lift-down and neutral positions of said main valve.

With these arrangements in operation, when the work implement is lowered, the oil from the actuator passes through the first return oil passage and returns directly to the oil tank, i.e. without being influenced by any back pressure. Similarly, as being directly connected with the oil tank, the relief valve also can always operate properly without being disturbed by any back pressure.

Therefore, with the above-described characterizing features of the invention, the charge oil passage is not connected in series with the oil feed passage and also the return oil from the actuator is returned to the oil tank through the first return oil passage without being affected by a back pressure. Accordingly, even a light-weight work implement can be lowered smoothly and reliably because of the smooth returning action of the return oil from the actuator. This is particularly advantageous for the single acting cylinder, as described hereinbefore. Further, since the second return oil passage for the relief valve is not connected with the charge oil passage but with the oil tank directly, the relief valve can always be operated properly with the set predetermined pressure without being disturbed by the back pressure. Consequently, with the invention's hydraulic circuit, both the work implement and the relief valve can always function properly in a stable manner without being affected by back pressure of the charge oil passage for the change-speed device.

Further and other objects, features and effects of the invention will become more apparent from the following more detailed description of the embodiment of the invention with reference to the accompanying drawings.

### BRIEF DESCRIPTION OF THE DRAWINGS

Accompanying drawings illustrate a preferred embodiment of an invention's hydraulic circuit for use in a lifting mechanism of a work vehicle; in which,
Fig. 1 is a side view showing a rear portion of an agricultural tractor as an example of the work vehicle,
Fig. 2 is a diagram showing an entire hydraulic circuit construction,
Fig. 3 is a diagram illustrating the circuit as under operation for lifting up a work implement, and
Fig. 4 is a diagram illustrating the circuit as under operation for lowering the work implement.

### DESCRIPTION OF THE PREFERRED EMBODIMENT

One preferred embodiment of the invention will be now described in particular with reference to the accompanying drawings.

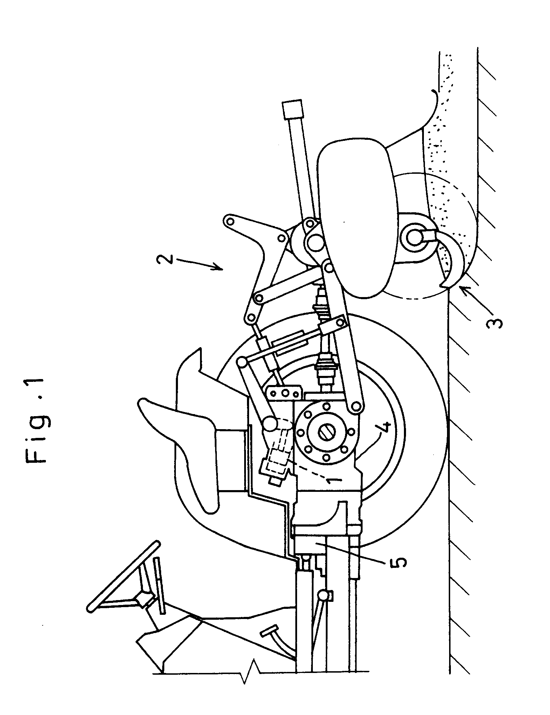

Fig. 1 shows a rear portion of an agricultural tractor as an example of a work vehicle. This vehicle includes a transmission casing 4, a hydrostatic transmission device 5 (to be briefly referred to as the HST hereinafter) attached to a front side of the transmission casing 4, a three-point link type lift implement 2 attached to a rear end of the vehicle body to be lifted up and down relative thereto by means of a single-acting type lift cylinder 1 as a hydraulic actuator, and a rotary plow 3 attached to a rear end of the lift implement 2 as a work implement.

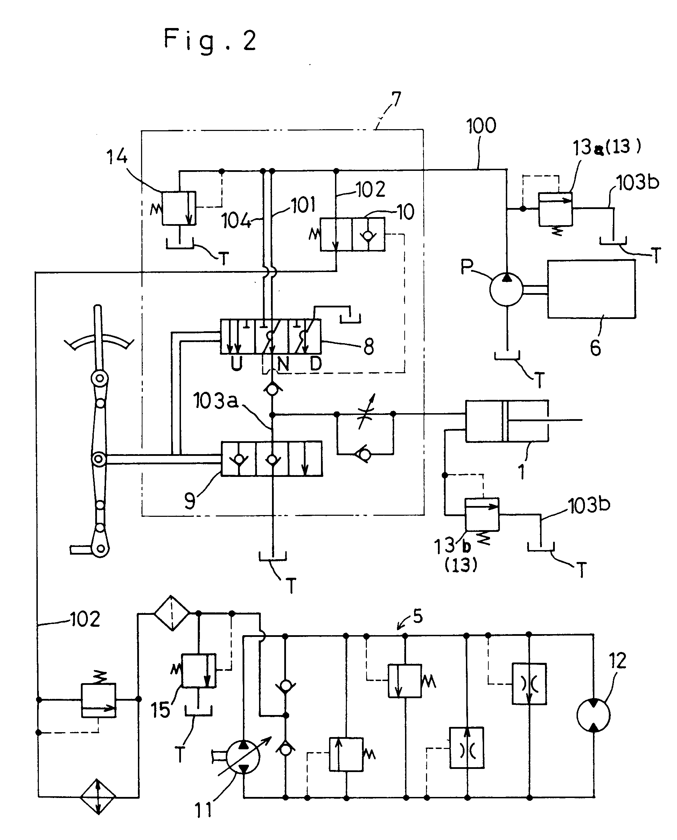

Referring to Fig. 2, a hydraulic circuit construction operating the lift cylinder 1 and the HST 5 will now be described in particular.

As shown, a hydraulic pump P, as a hydraulic power source driven by an engine 6, is connected through a source oil passage 100 with a feed oil passage 101 for the lift cylinder 1 and also with a charge oil passage 102 for the HST 5. Further, these feed oil passage 101 and the charge oil passage 102 are connected in parallel relative to each other with the hydraulic power source P. Adjacent the junction between the source oil passage 100 and the feed oil passage 101, a pilot oil passage 104 is disposed for generating a pilot pressure at this position.

Further, in the circuit construction described above, branching junctions of the respective oil passages 100, 101, 102 and 104 are incorporated into a position-control valve 7 configurated by an alternate long and two short dashes line in Fig. 2. This position-control valve 7 consists essentially of a main valve 8, a poppet valve 9 and an unloader valve 10.

The main valve 8 is included in the feed oil passage 101 and functions to switch over the lift cylinder 1 among a lift-up position U, a neutral position N and a lift-down position D. That is, by switching over this main valve 8, the work implement 3 is lifted up and down by means of the lift cylinder 1. Further, the main valve 8 is connected with the pilot oil passage 104, so that the above-described switch-over operation causes also a switch-over of a pilot pressure from the main valve 8 communicated to the unloader valve 10. The main valve 8 is mechanically connected with the poppet valve 9, and therefore the switchover of this main valve 8 causes also a switchover of the poppet valve 9.

The poppet valve 9 is included in a first return oil passage 103a. This first return oil passage 103a is branched from the feed oil passage 101 at a position downstream of the main valve 8 and extending to the lift cylinder 1. As described above, this poppet valve 9 is operatively, connected with the main valve 8. Thus, when the main valve 8 is operated to the lift-down position D, the poppet valve 9 is opened to return the oil to the tank T. Alternately, when the main valve 8 is operated to the lift-up position U or to the neutral position N, the poppet valve 9 is closed for closing the first return oil passage 103a.

The unloader valve 10 is disposed adjacent the junction between the charge oil passage 102 and the source oil passage 100 for controlling, i.e. selectively allowing and blocking inflow of the oil into the charge oil passage 102. Also, as described hereinbefore, this unloader valve 10 receives the pilot pressure from the main valve 8 in accordance with the operational position of the same. More specifically, when the main valve 8 is operated to the lift-up position U, the unloader valve 10 functions to block the inflow of oil into the charge oil passage 102. When the main valve 8 is operated to the neutral position N or to the lift-down position D, the unloader valve 10 functions to allow the oil inflow into the charge oil passage 102.

The HST 5 includes a variable displacement pump 11 driven by the engine 6 and a motor 12 connected with the pump 11 through a closed oil circuit to be driven in forward and reverse directions at variable speeds, and the HST 5 receives the operating oil from the charge oil passage 102.

A relief valve 13a (13) is provided for the source oil passage 100. A relief valve 13b (13) is provided for the lift cylinder 1. When the construction of this embodiment is actully used, the relief valve 13a is set at 150 bar while the relief valve 13b is set at 200 bar. And, return oil from these relief valves 13a and 13b is directly returned to the oil tank T through a second return oil passage 103b. These relief valves 13a and 13b are to control the pressures in the feed oil passage 101 and the charge oil passage 102. Further, a further relief valve 14 is provided for relieving a surge pressure generated in association with a switchover operation of the main valve 8. A still further relief valve 15 is provided for maintaining the pressure at this position at about 10 bar..

Functions of the above-described hydraulic circuit will now be described.

Referring to Fig. 2, when the main valve 8 is operated to the neutral position N, the poppet valve 9 remains closed, whereby the lift cylinder 1 is held in an equillibrium through balance between the hydraulic pressure from the feed oil passage 101 and the self-weight of the work implement 3. In this condition, the unloader valve 10 does not receive any pilot pressure and therefore allows inlet of oil into the charge oil passage 102.

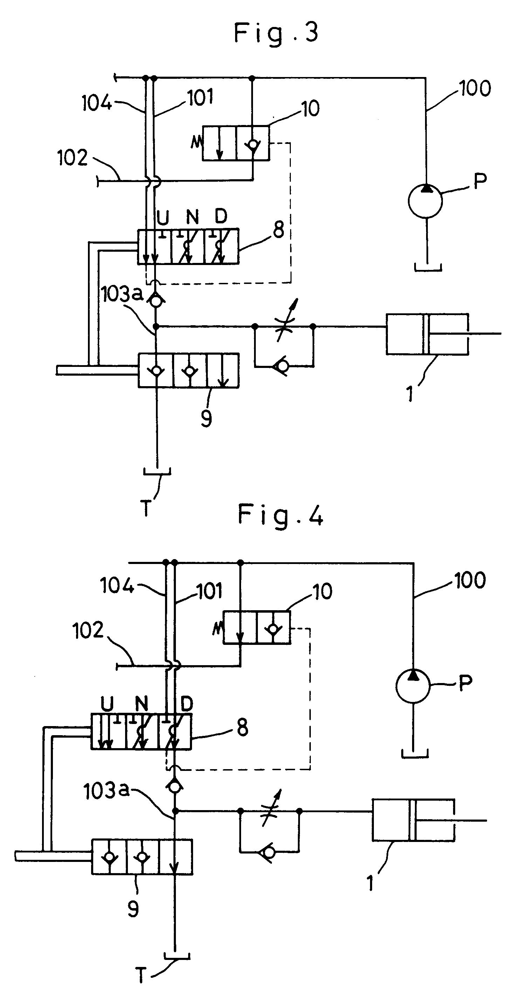

Then, when the main valve 8 is switched to the lift-up position U as illustrated in Fig. 3, the poppet valve 9 and the unloader valve 10 are closed, whereby the oil is fed solely to the lift cylinder 1. That is to say, the entire pressure of the oil fed from the pump P is used for a lifting-up operation of the hydraulic actuator 1. And, this hydraulic pressure is determined by the setting pressure of the relief valve 13. Therefore, no oil flows from the charge oil passage 102 into the HST 5.

Next, when the main valve 8 is operated to the lift-down position D as illustrated in Fig. 4, the unloader valve 10 and the poppet valve 9 remain open, whereby the oil is fed to the charge oil passage 102 and also the return oil from the cylinder 1 is returned to the oil tank T through the first return oil passage 103a. In this way, since the oil from the lift cylinder 1 is directly returned to the tank T via the poppet valve 9, the lift cylinder 1 does not receive any back pressure from the oil tank T.

The above-described hydraulic circuit construction of this embodiment will be particularly useful for such light-weight, ground-working vehicles as a lawn mower.

Although reference numerals and marks are provided in the appended claims in order to facilitate reference to the accompanying drawings, it is understood that these numerals and marks are not to limit the scope of the invention to the constructions disclosed in the drawings.

## Claims

1. A hydraulic circuit for use in a lifting mechanism of a work vehicle, the circuit having:
a hydraulic power source (P);
an oil tank (T);
a feed oil passage (101) for feeding oil from the hydraulic power source (P) to a single acting hydraulic cylinder (1) for lifting up and down a work implement (3);
a charge oil passage (102) for feeding oil from the hydraulic power source (P) to a hydraulic device; and
relief valves (13a, 13b, 14, 15) for the feed oil passage (101) and the charge oil passage (102);
said feed oil passage (101) and said charge oil passage (102) being connected in parallel relative to each other with said hydraulic power source (P);
a first return oil passage (103a) from said cylinder (1) and a second return oil passage (103b) from said relief valve (13) being directly connected with said oil tank (T) so that with lowering of said work implement (3) return oil from said cylinder (1) is directly returned to said oil tank (T), return oil from said relief valve (13) also being directly returned to said oil tank (T);
**characterized in that**
the hydraulic device is a hydrostatic transmission device (5); and
said feed oil passage (101) includes a main valve (8) for switching over pressure to said hydraulic cylinder (1) among a lift-up position (U), a neutral position (N) and a lift-down position (D), said first return oil passage (103a) includes a poppet valve (9) for opening and closing said first return oil passage (103a) with respect to said oil tank (T) in correspondence with said lift-down position (D) and with said lift-up (U) and said neutral position (N) of said main valve (8), respectively, an unloader valve (10) being provided at an inlet portion to said charge oil passage (102) for preventing oil from said hydraulic power source (P) from entering said charge oil passage (102) in correspondence with said lift-up position (U) of said main valve (8) and for allowing the oil to enter said charge oil passage (102) in correspondence with said lift-down (D) and neutral positions (N) of said main valve (8).

2. A hydraulic circuit as defined in claim 1, characterized in that said main valve (8), said poppet valve (9) and said unloader valve (10) are integrated as a position control valve (7).

## Patentansprüche

1. Hydraulikkreis zum Einsatz in einer Hebemechanik eines Arbeitsfahrzeugs, welcher folgendes aufweist:
eine Versorgung (P) für die Hydraulikkraft;
einen Öltank (T);
eine Ölzuführleitung (101) zum Zuführen von Öl von der Hydraulikkraftversorgung (P) zu einem einzigen hydraulischen Arbeitszylinder (1) zum Aufwärts- und Abwärtsbewegen eines Arbeitswerkzeugs (3);
eine Füllölleitung (102) zum Zuführen von Öl von der Hydraulikkraftversorgung (P) zu einer hydraulischen Vorrichtung; und Sicherheitsventile (13a, 13b, 14, 15) für die Ölzuführleitung (101) und die Füllölleitung (102);
wobei die Ölzuführleitung (101) und die Füllölleitung (102) jeweils relativ zueinander parallel zur Hydraulikkraftversorgung (P) angeschlossen sind;
und eine erste Ölrückführleitung (103a) vom Zylinder (1) und eine zweite Ölrückführleitung (103b) von dem Sicherheitsventil (13) direkt mit dem Öltank (T) so verbunden sind, daß beim Absenken des Arbeitswerkzeugs (3) vom Zylinder (1) zurückgeführtes Öl direkt in den Öltank (T) zurückgefördert wird, und vom Sicherheitsventil (13) zurückgeführtes Öl ebenfalls direkt in den Öltank (T) zurückgefördert wird
**dadurch gekennzeichnet**, daß
die hydraulische Vorrichtung ein Hydrostatgetriebe (5) ist; und daß die Ölzuführleitung (101) ein Hauptventil (8) zur Umschaltung des Drucks auf den Hydraulikzylinder (1) zwischen einer Anhebeposition (U), eIner neutralen Position (N) und einer Absenkposition (D) aufweist, wobei die erste Ölrückführleitung (103a) ein Tellerventil (9) zum Öffnen und Schließen der ersten Ölrückführleitung (103a) gegenüber dem Öltank (T) entsprechend der Absenkposition (D) bzw. der Anhebeposition (U) bzw. der neutralen Position (N) des Hauptventils (8) aufweist, und wobei an einem Einlaßbereich der Füllölleitung (102) ein Austragsventil (10) vorgesehen ist, welches den Eintritt von Öl aus der Hydraulikkraftversorgung (P) in die Füllölleitung (102) entsprechend der Anhebeposition (U) des Hauptventil (8) verhindert und den Eintritt von Öl in die Füllölleitung (102) entsprechend der Absenkposition (D) und der neutralen Position (N) des Hauptventils (8) gestattet.

2. Hydraulikkreis nach Anspruch 1, dadurch gekennzeichnet, daß das Hauptventil (8), das Tellerventil (9) und das Austragsventil (10) in Form eines Positionssteuerventils (7) integriert sind.

## Revendications

1. Circuit hydraulique destiné à être utilisé dans un mécanisme de relevage d'un véhicule utilitaire comprenant :
une source de puissance hydraulique (P) ;
un réservoir d'huile (T) ;
un passage d'huile d'alimentation (101) servant à acheminer l'huile de la source de puissance hydraulique (P) à un vérin hydraulique à simple effet (1) pour faire monter et descendre un instrument travaillant ;
un passage d'huile de charge (102) destiné à acheminer l'huile de la source de puissance hydraulique à un dispositif hydraulique (P) ;
et des valves de surpression (13a, 13b, 14, 15) pour le passage d'huile d'alimentation (101) et le passage d'huile de charge (102) ;
ledit passage d'huile d'alimentation (101) et le passage d'huile de charge (102) étant connectés en parallèle à ladite source de puissance hydraulique (P) ;
un premier passage d'huile de retour (103a) revenant dudit vérin (1) et un second passage d'huile de retour (103b) revenant de ladite valve de surpression (13) étant directement reliés audit réservoir d'huile (T) de sorte que, lors de la descente dudit instrument travaillant (3), l'huile de retour revenant dudit vérin (1) est directement renvoyée audit réservoir d'huile (T), l'huile de retour revenant de ladite valve de surpression (13) étant directement renvoyée audit réservoir d'huile (T),
caractérisé en ce que
le dispositif hydraulique est un dispositif de transmission hydrostatique (5) ; et ledit passage d'huile d'alimentation (101) comprend une valve principale (8) pour commuter la pression audit vérin hydraulique (1) entre une position de relevage (U), une position neutre (N) et une position de descente (D), ledit premier passage d'huile de retour (103a) comprend une valve à clapet (9) pour ouvrir et fermer ledit premier passage d'huile de retour (103a) par rapport audit réservoir d'huile (T) respectivement dans ladite position de descente (D) et dans lesdites positions de relevage (U) et neutre (N) de ladite valve principale (8), une valve de décharge (10) étant prévue à une partie d'entrée dudit passage d'huile de charge (102)pour empêcher l'huile provenant de ladite source de puissance hydraulique (P) d'entrer dans ledit passage d'huile de charge (102) dans ladite position de relevage (U) de ladite valve principale (8) et pour laisser l'huile entrer dans ledit passage d'huile de charge (102) dans lesdites positions de descente (D) et neutre (N) de ladite valve principale (8).

2. Circuit hydraulique selon la revendication 1, caractérisé en ce que ladite valve principale (8), ladite valve à clapet (9) et ladite valve de décharge (10) sont intégrées dans un distributeur de commande de position (7).
